# EUROPEAN PATENT SPECIFICATION

(11) **EP 2 069 660 B1**
(45) Date of publication and mention of the grant of the patent: **23.02.2011**
(21) Application number: 06805866.8
(22) Date of filing: 26.09.2006
(51) Int. Cl.: F16K 1/44

(54) **POPPET VALVE ORIFICE**
TELLERVENTILÖFFNUNG
ORIFICE DE DISTRIBUTEUR À CLAPET

(43) Date of publication of application: 17.06.2009
(73) Proprietor: Fluid Automation Systems S.A., 1290 Versoix (CH)
(72) Inventor: ALVAREZ, Raphael, 1202 Genève (CH); SIRDEY, Pierre, 1205 Genève (CH)
(74) Representative: Holmes, Matthew William
(86) International application number: PCT/EP2006/009341
(87) International publication number: WO 2008/037273

(56) References cited:
- DE-T5-112004 000 114
- GB-A- 407 232
- US-A- 1 947 935
- US-A- 3 452 542

## Description

### Background of the Invention

### 1. Field of the Invention

The present invention relates to a poppet valve orifice.

### 2. Statement of the Problem

A poppet valve comprises one or more valve orifices and a poppet that moves both into contact with and away from the valve orifice or orifices in order to perform a valve function. The poppet valve includes an actuator that moves the poppet. A common actuator is an electromagnet. In the electromagnet actuator, electric current passing through a coil, with the coil typically formed around a core, and thereby generates a magnetic field. The magnetic field operates on an armature connected to the valve member, wherein the armature pushes the valve member to an activated position. Typically, the poppet valve includes a spring that generates a biasing force in opposition to the magnetic field. Therefore, in the absence of a magnetic field generated by the electromagnet, the valve member is moved by the spring into a normally open or normally closed position.

Poppet valves have several advantages. Poppet valves can accommodate high flow rates. Poppet valves can accommodate varying flow rates. Poppet valves can form a highly reliable seal, even in the presence of moisture, dirt, debris, etc. Due to the benefits that poppet valves provide, they are very popular for industrial applications, such as for controlling machinery and for metering fluids including liquids and gases.

DE Patent No. 11 2004 000 114 (and equivalent U.S. Patent No.7,290,564) includes a valve orifice that is formed of three curved slots. The three curved slots are contacted by and blocked by a reciprocally moving plunger, which may include a seal member. The slots are symmetric about a center point and are annular in arrangement. A central guide boss guides the plunger and aligns it with the three apertures. The apertures provide a relatively small cross-section for the fluid flow to pass through.

U.S. Patent No. 3,452,542 discloses a gas turbine engine cooling system that includes a valve assembly. An oval valve plate can be moved to block an oval opening.

U.S. Patent No. 1,947,935 discloses a feather valve including a feather plate having series of slots and a guard plate including a series of slots that are between the slots of the feather plate. Flexing of the feather plate toward the guard plate can allow the slots therein to be blocked by the guard plate when in contact therein. Flexing of the feather plate away from the guard plate allows a fluid to travel between the slots of the feather plate and the offset slots of the guard plate.

Electromagnet poppet valves include an electromagnet that is electrically energized and de-energized in order to move the poppet and perform the valving function. Electromagnet poppet valves have fast response times. The electromagnet can generate high operating forces improperly designed. Electromagnet poppet valves can be computer controlled or remotely controlled, and therefore are well suited for industrial applications.

One increasingly common application is the use of electromagnet poppet valves in a valve island. A valve island is a grouping of multiple valves that are used to meter and/or control the flow of fluids. Advantageously, the individual valve units of the valve island can be added and removed as desired and the numbers of valves can be selected and changed. In addition, valves of different types or having different operating characteristics can be selected and installed on the valve island.

A valve island is commonly used to provide and control multiple fluid streams to a common device or for a common purpose. For example, in the pharmaceutical industry, multiple valves may be used to meter out compounds that are mixed in order to form a final compound. Another use of a valve island is in metering fluids in biotech applications. Yet another use is a valve island for controlling the delivery of pressurized gases in an industrial settling.

In the prior art, there has been a movement to smaller and smaller electromagnet poppet valves. Smaller electromagnet poppet valves enable a higher valve unit density in a valve island, for example. However, a drawback of this miniaturization is that smaller electromagnets generate smaller closing forces, while smaller valve orifices pass smaller volumes of fluids.

### Summary of the Invention

A poppet valve is provided according to an embodiment of the invention. The poppet valve comprises a valve body, a valve poppet movable in the valve body, and at least one non-symmetric orifice in the valve body. The valve poppet is configured to move to a substantially blocking position with regard to the at least one non-symmetric orifice and configured to move away from the at least one non-symmetric orifice.

A poppet valve is provided according to an embodiment of the invention. The poppet valve comprises a valve body, a valve poppet movable in the valve body between at least a substantially closed position and an open position, and two or more valve orifices in the valve body. The valve poppet is configured to move to a substantially blocking position with regard to the two or more valve orifices in the substantially closed position and configured to move away from the two or more valve orifices in the open position.

A poppet valve is provided according to an embodiment of the invention. The poppet valve comprises a valve body, a valve poppet movable in the valve body, and at least one non-symmetric valve orifice in the valve body. The valve poppet is configured to move to a substantially blocking position with regard to the at least one non-symmetric orifice and configured to move away from the at least one non-symmetric orifice. The poppet valve further comprises a valve actuation member coupled to the valve poppet. The valve actuation member passes through the at least one non-symmetric valve orifice.

### Aspects of the Invention

In one embodiment of the poppet valve, the at least one non-symmetric valve orifice includes a length Lₒ that is greater than a width Wₒ.

In another embodiment of the poppet valve, the at least one non-symmetric valve orifice comprises two or more non-symmetric orifices.

In yet another embodiment of the poppet valve, the at least one non-symmetric orifice further comprises an upper non-symmetric orifice and a lower non-symmetric orifice.

In yet another embodiment of the poppet valve, the at least one non-symmetric orifice further comprises two or more upper non-symmetric orifices and two or more lower non-symmetric orifices.

In yet another embodiment of the poppet valve, the two or more valve orifices comprises two or more non-symmetric valve orifices.

In yet another embodiment of the poppet valve, the two or more valve orifices comprises two or more non-symmetric valve orifices, with an orifice of the two or more valve orifices including a length Lₒ that is greater than a width Wₒ.

In yet another embodiment of the poppet valve, the at least one non-symmetric orifice further comprises two or more upper valve orifices and two or more lower valve orifices.

In yet another embodiment of the poppet valve, the at least one non-symmetric orifice further comprises two or more upper non-symmetric valve orifices and two or more lower non-symmetric valve orifices.

### Description of the Drawings

The same reference number represents the same element on all drawings. It should be understood that the drawings are not necessarily to scale.
FIG. 1 shows a poppet valve according to an embodiment of the invention.
FIGS. 2A-2F show various configurations of a valve orifice of the poppet valve according to various embodiments of the invention.
FIG. 3 shows a multiple orifice arrangement according to an embodiment of the invention.
FIG. 4 is a cross-sectional view of the poppet valve according to an embodiment of the invention.
FIG. 5 is a cross-sectional view of the poppet valve according to an embodiment of the invention.
FIG. 6 is a cross-sectional view BB of the poppet valve of FIG. 5.
FIG. 7 is a cross-sectional view of the poppet valve according to an embodiment of the invention.
FIG. 8 is a cross-sectional view CC of the poppet valve of FIG. 7.
FIG. 9 is a cross-sectional view DD of the poppet valve of FIG. 8.

### Detailed Description of the Invention

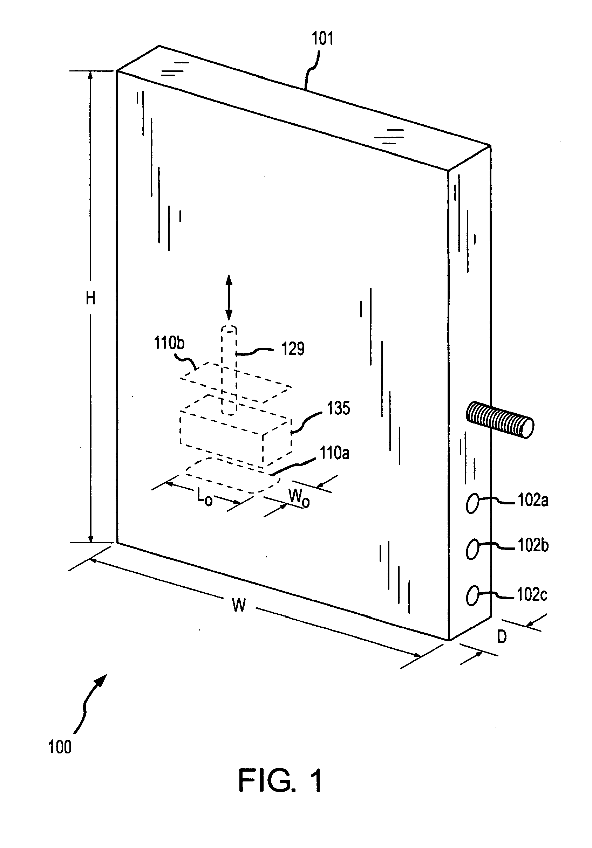

FIGS. 1-9 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

FIG. 1 shows a poppet valve 100 according to an embodiment of the invention. Components in common with other figures share reference numbers. The poppet valve 100 includes a valve body 101 and two or more ports 102 that conduct fluids, such as the ports 102a, 102b, and 102c in the figure. The fluids can include liquids and gases.

The valve body 101 has a substantially planar shape, including a height H, a width W, and a depth D. The poppet valve 100 in one embodiment is designed to comprise a modular valve, and therefore can be affixed to a base or valve island and therefore can be placed adjacent to similar valves. As a result, the depth D is desired to be kept at a minimum so that multiple such poppet valves 100 can be affixed to the common base. Consequently, the overall shape and size of the poppet valve 100 is of great importance.

One effect of this design consideration is that the orifice size of the valve is typically minimized in the prior art. Consequently, the overall flow rate of a prior art valve is therefore negatively impacted or at best limited by the orifice dimension.

The invention includes at least one orifice 110 within the valve body 101 and in communication with the two or more ports 102. In one embodiment, the at least one orifice 110 comprises a lower orifice I 110a and an upper orifice 110b. However, in some embodiments the poppet valve 100 can include only one orifice 110.

The orifice 110 according to an embodiment of the invention can be non-symmetric and can have a length Lₒ that is greater than a width Wₒ. In some embodiments, the ratio of the orifice length Lₒ to the width Wₒ can comprise any value greater than one. As a consequence, the orifice 110 can conduct a greater flow volume than a symmetric orifice of the prior art.

The figure further shows a valve poppet 135. The valve poppet 135 can fit into an orifice 110 or can fit over an orifice 110 in a closed (*i.e*., blocking) position. The valve poppet 135 is moved within the valve body 101 in order to substantially block or unblock one or both of the orifices 110a and 110b. For example, the valve poppet 135 can move to a substantially blocking position with regard to the orifice 110a and/or the orifice 110b, and can be configured to move away from the orifice 110a and/or the orifice 110b.

The valve poppet 135 is connected to a valve actuation member 129. The valve poppet 135 can be moved and actuated by the valve actuation member 129. The valve actuation member 129 can be coupled to any manner of activation mechanism.

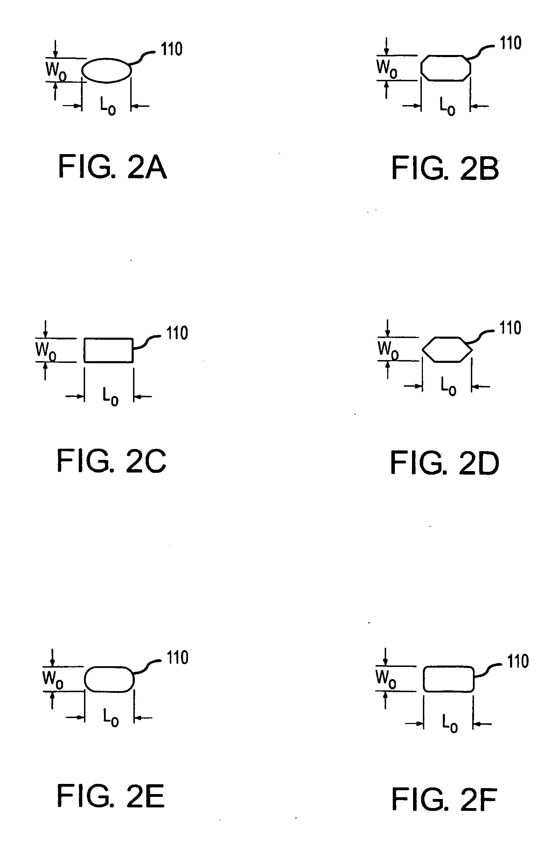

FIGS. 2A-2F show various configurations of a valve orifice 110 of the poppet valve 100 according to various embodiments of the invention. It should be understood that the orifice 110 can comprise one or both of the lower orifice 110a and/or the upper orifice 110b.

FIG. 2A shows a substantially oval orifice 110. FIG. 2B shows a substantially rectangular orifice 110 including angled end portions. FIG. 2C shows a substantially rectangular orifice 110. FIG. 2D shows a substantially parallel-sided orifice 110 including pointed ends. FIG. 2E shows a substantially parallel-sided orifice 110 including rounded ends. FIG. 2F shows a substantially rectangular orifice 110 including rounded corners. Alternatively, the orifice 110 can comprise various combinations of the above orifice shapes or can even comprise irregular shapes. In addition, other orifice shapes are contemplated and are within the scope of the description and claims.

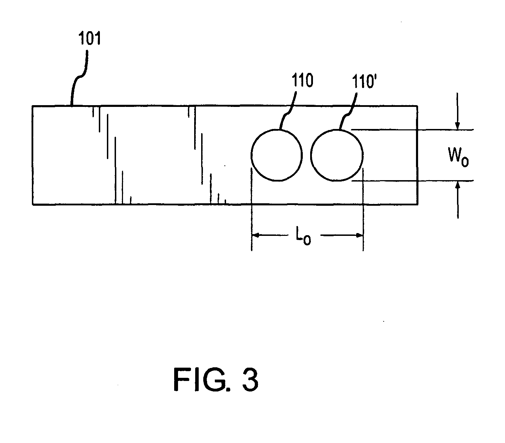

FIG. 3 shows a multiple orifice arrangement according to an embodiment of the invention. In this embodiment, the orifice arrangement comprises two or more orifices 110 and 110'. Two or more orifices 110 and 110' can be used in order to increase the aspect ratio of the orifice length Lₒ to the orifice width Wₒ. As a result, the orifice length LO is effectively greater than the orifice width WO, even where a single orifice 110 or 110' is substantially symmetric.

The orifices 110 and 110' in this embodiment can be substantially circular, as shown. Alternatively, the orifices 110 and 110' can comprise any other shape, including the shapes shown in FIGS. 2A-2F.

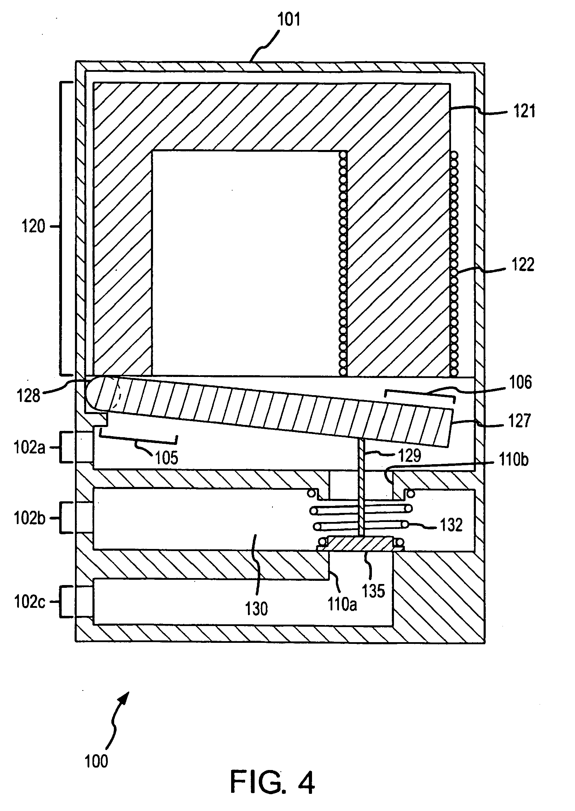

FIG. 4 is a cross-sectional view of the poppet valve 100 according to an embodiment of the invention. In the embodiment shown, the poppet valve 100 includes an actuator 120 and a pivoting armature 127 located below the actuator 120. The actuator 120 in the embodiment shown comprises an electromagnet including a core 121 and a coil 122 and the pivoting armature 127 is correspondingly formed of a magnetically attracted material, such as a ferrous material. However, it should be understood that other actuators can be employed in the poppet valve 100. The pivoting armature 127 includes a first end 105 and a second end 106 and a pivot member 128 at the first end 105. Consequently, the pivoting armature 127 pivots around the first end 105. However, it should be understood that alternatively the pivot location could be reversed in the figure and the pivot armature 127 would still function the same.

The pivot member 128 can comprise any member or device that enables the pivoting armature 127 to pivot. The pivot member 128 in one embodiment comprises a shaft or axle that is received by the valve body 101 of the poppet valve 100. In one embodiment, the pivot member 128 comprises an elastic component that maintains the pivot armature 127 substantially against the core 121.

The poppet valve 100 further includes the two or more ports 102, such as the first, second, and third ports 102a, 102b, and 102c in the embodiment shown. In one embodiment, the second port 102b comprises an inlet port, while the first and third ports 102a and 102c comprise outlet ports selected by activation of the poppet valve 100. The port 102b communicates with a poppet chamber 130. However, other configurations are contemplated and are within the scope of the description and claims.

The poppet valve 100 further includes the orifice 110. In the embodiment shown, the poppet valve 100 includes a lower orifice 110a and an upper orifice 110b. In the embodiment shown, the lower and upper orifices 110a and 110b communicate with the poppet chamber 130. However, it should be understood that alternatively the poppet valve 100 can include only the lower orifice 110a and two ports 102b and 102c. One or both of the upper orifice 110b and the lower orifice 110a can be substantially non-symmetric, as previously discussed. A non-symmetric valve orifice can include a length Lₒ that is greater than a width Wₒ. The upper orifice 110b communicates between the first port 102a and the second port 102b. The lower orifice 110a communicates between the second port 102b and the third port 102c.

The poppet valve 100 further includes a valve poppet 135 in the poppet chamber 130. The valve poppet 135 can move to selectively block either the lower orifice 110a or the upper orifice 110b. In one embodiment, the valve poppet 135 is urged into closing with the lower orifice 110a in the absence of activation of the actuator 120 and is pulled upward into closing with the upper orifice 110b when the actuator 120 is activated.

The valve poppet 135 is connected to the pivoting armature 127 by a tension connector member 129. The tension connector member 129 can be rigidly or pivotally attached to the pivoting armature 127. Any suitable attachment device or attachment configuration can be employed. In one embodiment, the tension connector member 129 is pivotally connected to the pivoting armature 127. Alternatively, the tension connector member can be fixedly connected to the pivoting armature 127, such as where the tension connector member 129 is at least partially flexible. For example, in this embodiment the tension connector member 129 can comprise a wire or thin strip.

The tension connector member 129 can be connected to the pivoting armature 127 at the second end 106 of the pivoting armature 127, for example. Alternatively, the tension connector member 129 can be connected to the pivoting armature 127 between the first end 105 and the second end 106. The tension connector member 129 can be connected at a predetermined position away from the first end 105 in order to generate a predetermined displacement force in the tension connector member 129. The tension connector member 129 can be connected at a predetermined position away from the first end 105 in order to generate a predetermined displacement travel. Therefore, the location of the attachment can be determined according to a lever arm calculation, wherein the location of the tension connector member attachment location is determined according to the required force multiplication and/or the required displacement travel.

Several different design aspects allow the poppet valve 100 to be designed with a predetermined displacement force and a predetermined displacement travel. The vertical position of the tension connector member 129 can be adjusted relative to the pivoting armature 127. In one embodiment, the vertical adjustment can be achieved by a press fitting for the tension connector member 129, for example. Other adjustment or coupling means for the tension connector member 129 are contemplated and are within the scope of the description and claims. In addition, the length of the tension connector member 129 can be varied as desired. Further, the pivoting armature 127 can be positioned a predetermined distance D from the actuator 20. The predetermined distance D can be varied as desired. One or more of these design factors can be varied in order to generate a predetermined displacement force and a predetermined displacement travel for the valve poppet 135.

The tension connector member 129 is subject to a tension force when the actuator 120 is activated, wherein the upward pivoting of the pivoting armature 127 places the tension force on the tension connector member 129. In addition, the biasing device 132 can contribute to the tension force on the tension connector member 129. The tension connector member 129 therefore lifts the valve poppet 135 away from the lower orifice 110a when the actuator 120 is activated. The tension connector member 129 does not transmit any compression force.

The tension connector member 129 comprises any device or member that is capable of transmitting pivoting motion of the pivoting armature 127 to the poppet valve 135 as a tension force. The tension connector member 129 can be substantially flexible or substantially rigid. The tension connector member 129 can be formed of any suitable material. Because the tension connector member 129 transmits a tension force, the tension connector member 129 in some embodiments does not have to be very heavy or rigid.

In contrast, in the prior art, a compression member is widely used for transmitting force from an armature to a poppet valve. Such a prior art compression member has to be relatively large and heavy in construction in order to prevent flexing, bending, or buckling while under a compression force. Any deformation of the prior art compression member will result in lesser travel of a prior art valve poppet and therefore will result in improper and/or incomplete actuation.

It should be noted from the figure that the tension connector member 129 resides in the upper orifice 110b but not in the lower orifice 110a. The tension connector member 129 therefore does not occupy any cross-sectional area of the lower orifice 110a and does not restrict the fluid flow through the lower orifice 110a. In addition, due to the nature of the tension connector member 129, the tension connector member 129 occupies a minimal cross-sectional area in the upper orifice 110b.

The poppet valve 100 further includes a biasing device 132 that extends between the valve poppet 135 and the upper orifice 110b. The biasing device 132 acts in opposition to the pivoting armature 127 and provides a biasing force that urges the valve poppet 135 to a closed position with respect to the lower orifice 110a. The actuator 120, when activated, generates a magnetic force on the pivoting armature 127 that is sufficient to overcome the biasing device 132 and sufficient to lift the valve poppet 135. The biasing device 132 can comprise any manner of biasing device, including helical devices, flat or bowed devices, etc.

When the actuator 120 is not activated, the actuator 120 does not generate any tension force. Therefore, because of the biasing force generated by the biasing device 132, the valve poppet 135 is force down into a closed position in the lower orifice 110a. As a result, the first port 102a is placed in communication with the second port 102b and the third port 102c is blocked.

When the actuator 120 is activated, the coil 122 and the core 121 form a magnetic circuit that place a magnetically attractive force on the pivoting armature 127. As a result, the pivoting armature 127 is pulled upward and consequently pivots in an upward direction. The resulting pivoting of the pivoting armature 127 places a tension force on the tension connector member 129, which in turn places a lifting force on the valve poppet 135. The lifting force overcomes the biasing force provided by the biasing device 132. Consequently, the valve poppet 135 moves up and away from the lower orifice 110a and into a closing position in the upper orifice 110b. As a result, the third port 102c is placed in communication with the second port 102b and the first port 102a is blocked.

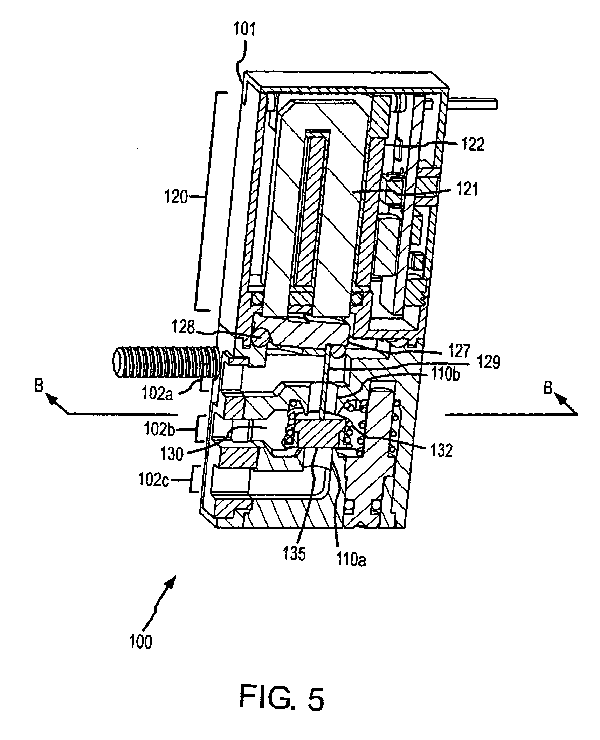

FIG. 5 is a cross-sectional view of the poppet valve 100 according to an embodiment of the invention. The tension connector member 129 is shown passing through the upper orifice 110b. The tension connector member 129 in this embodiment is substantially round in cross-section. However, other cross-sectional shapes are contemplated and are within the scope of the description and claims.

It can be seen from the figure than the tension connector member 129 is small and thin. It can be seen that the tension connector member 129 is small enough that it could not place a compression force on the valve poppet 135. The tension connector member 129 can be flexible or at least partially flexible. For example, the tension connector member 129 can comprise a wire or cable. Consequently, the poppet valve requires only the single biasing device 132. In addition, the tension connector member 129 is small enough that it occupies a minimal cross-sectional area of the upper orifice 110b.

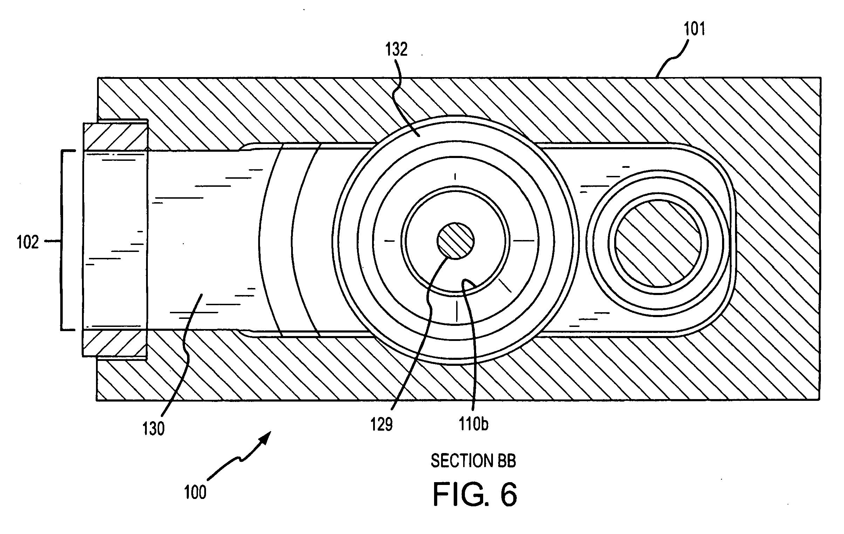

FIG. 6 is a cross-sectional view BB of the poppet valve 100 of FIG. 5. The cross-sectional view BB shows the size of the tension connector member 129 in relation to the upper orifice 110b. The tension connector member 129 in this embodiment is substantially circular in cross-section, as previously discussed.

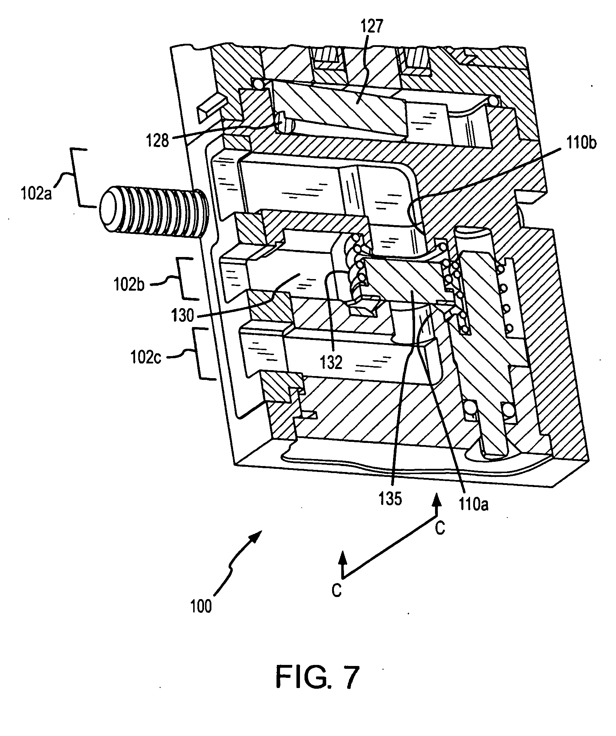

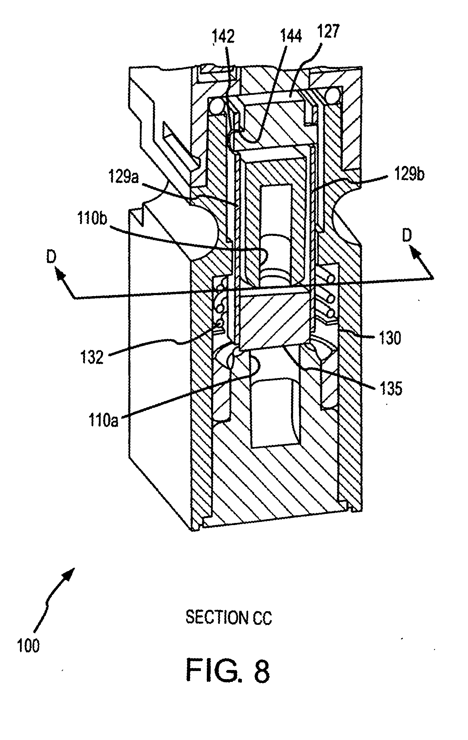

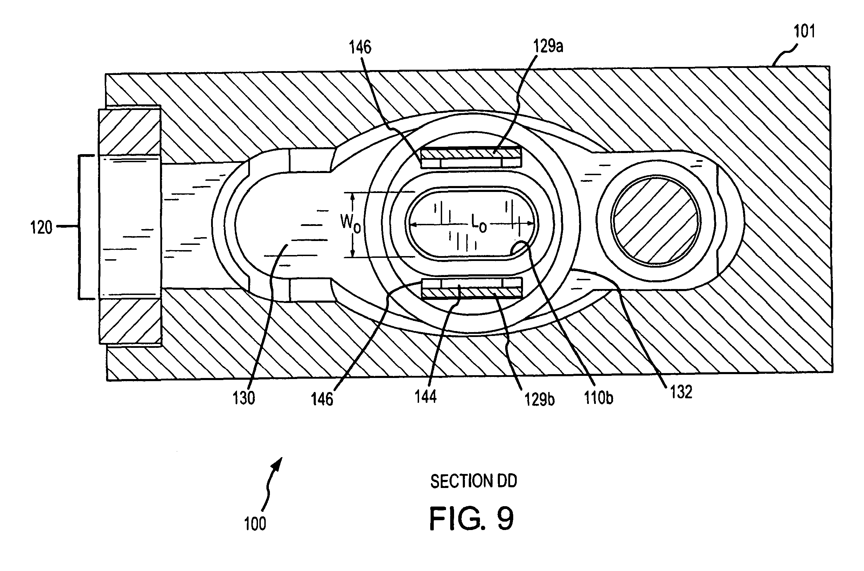

FIG. 7 is a cross-sectional view of the poppet valve 100 according to an embodiment of the invention. As before, the biasing device 132 places a tension force on the tension connector member 129, wherein the tension connector member 129 comprises two tension connector members 129a and 129b (not shown, see FIGS. 8 and 9). The two tension connector members 129a and 129b are offset from the center of the valve poppet 135.

In this embodiment, the upper orifice 110b is larger than the lower orifice 110a. In addition, the upper orifice 110b in the embodiment shown is not circular in shape (see FIG. 9).

FIG. 8 is a cross-sectional view CC of the poppet valve 100 of FIG. 7. In this embodiment, the tension connector member 129 comprises two substantially flat, thin strips 129a and 129b. The two tension connector members 129a and 129b can extend by the sides of the valve poppet 135. The two tension connector members 129a and 129b possess enough strength to pull the valve poppet 135 upward, against the biasing device 132. However, the tension connector members 129a and 129b do not possess enough rigidity to exert a compression force on the valve poppet 135. Therefore, the two tension connector members 129a and 129b can be at least partially flexible.

In the embodiment shown, the tension connector members 129a and 129b include apertures 142 and the pivot armature 127 includes corresponding projections 144. The tension connector members 129a and 129b therefore are pivotally attached to the pivoting armature 127.

FIG. 9 is a cross-sectional view DD of the poppet valve 100 of FIG. 8. This figure shows an upper orifice 110b that has two substantially parallel sides and rounded ends. The figure also shows the two tension connector members 129a and 129b passing through apertures 146 on either side of the upper orifice 110b. Consequently, the two tension connector members 129a and 129b in this embodiment do not occupy any cross-sectional space of the upper orifice 110b. Alternatively, the two tension connector members 129a and 129b can pass through the upper orifice 110b.

The poppet valve according to the invention can be employed according to any of the embodiments in order to provide several advantages, if desired. The invention provides a poppet valve that is compact in size. The invention provides a poppet valve that includes a large orifice size in a relatively small overall package. The invention provides a tension connector member that offers minimal orifice occupation. The invention provides a poppet valve that has a large valve opening force for its size.

## Claims

1. A poppet valve (100), comprising a valve body (101) and a valve poppet (135) movable in the valve body (101), with the poppet valve (100) being **characterized by**:
at least an upper non-symmetric valve orifice (110b) and a lower non-symmetric valve orifice (110a) in the valve body (101), with the upper non-symmetric valve orifice (110b) and the lower non-symmetric valve orifice (110a) being non-symmetric with a center point but symmetric about a straight axis and including a length L₀ greater than a width W₀;
with the valve poppet (135) being configured to move to a first actuated position substantially blocking the upper non-symmetric valve orifice (110b) and away from the lower non-symmetric valve orifice (110a) and with the valve poppet (135) being further configured to move to a second actuated position substantially blocking the lower non-symmetric valve orifice (110a) and away from the upper non-symmetric valve orifice (110b).

2. The poppet valve (100) of claim 1, with the poppet valve (100) further including a valve actuation member (129) coupled to the valve poppet (135), with the valve actuation member (129) passing through one of the upper non-symmetric valve orifice (110b) or the lower non-symmetric valve orifice (110a).

3. The poppet valve (100) of claim 1, with the upper non-symmetric valve orifice (110b) and the lower non-symmetric valve orifice (110a) further comprising:
two or more upper non-symmetric valve orifices (110b); and
two or more lower non-symmetric valve orifices (110a).

## Patentansprüche

1. Tellerventil (100), das einen Ventilkörper (101) und einen im Ventilkörper (101) beweglichen Ventilteller (135) umfasst, wobei das Tellerventil (100) **gekennzeichnet ist durch**:
wenigstens eine obere nichtsymmetrische Ventilöffnung (110b) und eine untere nichtsymmetrische Ventilöffnung (110a) in dem Ventilkörper (101), wobei die obere nichtsymmetrische Ventilöffnung (110b) und die untere nichtsymmetrische Ventilöffnung (110a) zu einem Mittelpunkt nichtsymmetrisch, aber um eine gerade Achse symmetrisch sind und eine Länge L₀ haben, die größer ist als eine Breite W₀;
wobei der Ventilteller (135) zum Bewegen in eine erste Stellposition konfiguriert ist, in der er die obere nichtsymmetrische Ventilöffnung (110b) im Wesentlichen versperrt und die fern von der unteren nichtsymmetrischen Ventilöffnung (110a) ist, und wobei der Ventilteller (135) ferner zum Bewegen in eine zweite Stellposition konfiguriert ist, in der er die untere nichtsymmetrische Ventilöffnung (110a) im Wesentlichen versperrt und die fern von der oberen nichtsymmetrischen Ventilöffnung (110b) ist.

2. Tellerventil (100) nach Anspruch 1, wobei das Tellerventil (100) ferner ein mit dem Ventilteller (135) gekoppeltes Ventilstellelement (129) aufweist, wobei das Ventilstellelement (129) durch die obere nichtsymmetrische Ventilöffnung (110b) oder die untere nichtsymmetrische Ventilöffnung (110a) passiert.

3. Tellerventil (100) nach Anspruch 1, wobei die obere nichtsymmetrische Ventilöffnung (110b) und die untere nichtsymmetrische Ventilöffnung (110a) ferner Folgendes umfassen:
zwei oder mehr obere nichtsymmetrische Ventilöffnungen (110b); und
zwei oder mehr untere nichtsymmetrische Ventilöffnungen (110a).

## Revendications

1. Une valve à clapet (100), comprenant un corps de valve (101) et un clapet de valve (135) mobile dans le corps de valve (101), la valve à clapet (100) étant **caractérisée par** :
au moins un orifice de valve non-symétrique supérieur (110b) et un orifice de valve non-symétrique inférieur (110a) dans le corps de valve (101), l'orifice de valve non-symétrique supérieur (110b) et l'orifice de valve non-symétrique inférieur (110a) étant non-symétriques avec un point central mais symétriques autour d'un axe droit et comportant une longueur Lₒ plus grande qu'une largeur Wₒ.
le clapet de valve (135) étant configuré pour passer à une première position actionnée bloquant substantiellement l'orifice de valve non-symétrique supérieur (110b) et à une certaine distance de l'orifice de valve non-symétrique inférieur (110a) et le clapet de valve (135) étant encore configuré pour passer à une deuxième position actionnée bloquant substantiellement l'orifice de valve non-symétrique inférieur (110a) et à une certaine distance de l'orifice de valve non-symétrique supérieur (110b).

2. La valve à clapet (100) de la revendication 1, la valve à clapet (100) comportant encore un membre d'actionnement de valve (129) accouplé au clapet de valve (135), le membre d'actionnement de valve (129) passant à travers l'un ou l'autre de l'orifice de valve non-symétrique supérieur (110b) ou de l'orifice de valve non-symétrique inférieur (110a).

3. La valve à clapet (100) de la revendication 1, l'orifice de valve non-symétrique supérieur (110b) et l'orifice de valve non-symétrique inférieur (110a) comprenant encore :
deux orifices de valve non-symétriques supérieurs (110b) ou plus ; et
deux orifices de valve non-symétriques inférieurs (110a) ou plus.
